# EUROPÄISCHE PATENTANMELDUNG

(11) **EP 0 538 596 A1**
(43) Veröffentlichungstag der Anmeldung: **28.04.1993**
(21) Anmeldenummer: 92114941.5
(22) Anmeldetag: 31.08.1992
(51) Int. Cl.: A01D 34/30

(54) **Mähwerksantrieb zur Verwendung an einem Nutzfahrzeug**

(30) Priorität: 22.10.1991 DE 9113087 U
(71) Anmelder: Köppl, Karl, D-94163 Saldenburg (DE)
(72) Erfinder: Köppl, Karl, D-94163 Saldenburg (DE)
(74) Vertreter: Riederer Freiherr von Paar zu Schönau, Anton

(57) **Zusammenfassung**

Ein Mähwerksantrieb zur Verwendung an einem Nutzfahrzeug, das über eine drehbare Antriebswelle (11) mit dem Mähwerk (1) verbunden ist, weist zwei horizontale, aufeinanderliegende, hinsichtlich der Vorwärtsrichtung des Fahrzeugs quer verlaufende Messer (14,15), die an ihrer vorderen Schneidenseite gezahnt sind und unter alternierender Überdeckung und Nebeneinanderlage der Zähne der beiden Messer relativ zueinander seitwärts linear hin- und herbewegbar sind, und einen Bewegungswandler (12) auf, der die Drehbewegung der Antriebswelle (11) in die Hin- und Herbewegung der Messer (14,15) umwamdelt und ein Geradschubkurbeltrieb ist, dessen Kurbel (33) einen Anschluß an die Antriebswelle und Anschlüsse für den Abtrieb außerphasiger reziprokierender Linearbewegungen aufweist, indem er an einem drehbaren Eingangszapfen wenigstens zwei Kröpfungen mit Kurbelzapfen (34,35) aufweist, deren Kurbelwinkel gegeneinander 90° bis 270° beträgt und die jeweils an einer Kulisse (138,139) mit einem Langloch angreifen, die mit einer geführten Antriebstraverse (16,17) für den Anschluß zum Abtrieb der Linearbewegung und deren Übertragung auf das jeweilige bewegliche Messer (14,15) verbunden ist, wobei die Kurbelzapfen (34,35) jeweils in eines der Langlöcher eingreifen und diese ihre Längserstreckung, die wenigstens gleich dem Durchmesser der Kurbelzapfenbahn ist, in einer Richtung quer zur Bewegungsrichtung der Messer hat.

## Beschreibung

Die Erfindung bezieht sich auf einen Mähwerksantrieb nach dem Oberbegriff des Anspruchs 1. Der erfindungsgemäße Mähwerksantrieb dient dem Antrieb von Doppelmesser-Mähwerken mit geradlinigen Messern.

Es sind solche Mähwerke mit einem Bewegungswandler in Form eines Getriebes bekannt, aus dessen Gehäuse zwei hin- und hergehende Zapfen vorstehen, die jeweils mit einem der Messer verbunden sind. Die Konstruktion dieses Getriebekastens erweist sich als sehr aufwendig sowohl für die Herstellung als auch für die Wartung und Reparatur.

Es könnte daran gedacht werden, die Drehbewegung der im wesentlichen horizontalen Antriebswelle über einen Kurbeltrieb, dessen Kurbel am Ende der Antriebswelle sitzt, in Hin- und Herbewegungen umzuwandeln. Hierbei ergeben sich jedoch konstruktive Probleme für die Doppelmesser-Mähwerke und Nachteile wegen der hohen Abnützung der Messer, die durch den Antrieb außer mit den antreibenden Querkräften auch noch mit einer vertikalen Kraftkomponente entsprechend dem Kurbeldurchmesser beaufschlagt werden; diese vertikale Kraftkomponente stützt die Messer zumindest teilweise gegeneinander ab, während sie in außerphasiger Bewegung sind.

Eine Kurbel mit vertikaler Drehachse, wie sie an einem Mähwerksantrieb mit kreisbogenförmigen Messerbalken an sich bekannt ist (DE-PS 38 21 235), erfordert andererseits eine komplizierte Antriebskinematik und/oder die Anbringung des Motors über dem Ort der Kurbel, also an einer Stelle, wo er wegen seines Gewichts im Gesamtkonzept als problematisch empfunden wird.

Zur Überdeckung des Bewegungswandlers dient eine Mähgut-Abweisblende, die vom Messerbereich nach hinten ansteigt und zum Zweck, darauffallendes Mähgut wie Gras, Klee usw. abzuschütteln, an ihrer Spitze mit einem der Messer hin- und herläuft. Diese Abweisblende und die Messer können jedoch unter Umständen, und zwar insbesondere bei einem sehr ruhigen Lauf des Mähwerks, vom Mähgut vollständig überhäuft werden, wodurch eine herabhängende Portion des Mähguts die vor dem Mähwerk liegenden Pflanzen umlegt oder zur Seite lenkt und deren Abschneiden behindert, zumindest eine erhöhte Stengellänge bewirkt.

In dem deutschen Gebrauchsmuster G 91 02 712.6 ist ein Mähwerksantrieb mit einem geschlossenen Kurbelgehäuse bekannt. Dieser ist zwar gegenüber anderen Antriebsformen schon von relativ einfacher Bauart, erfordert aber dennoch relativ hohe technologische Aufwendungen.

Demgegenüber soll durch die Erfindung mit einem einfachen Mechanismus ein zugleich ruhiges und das Mähgut abwerfendes Mähen ermöglicht werden.

Dies wird durch die im Anspruch 1 gekennzeichnete Erfindung erreicht. Bevorzugte Besonderheiten dieser Konstruktionen sind in den Unteransprüchen gekennzeichnet.

Durch die Erfindung wird erreicht, daß eine robuste, einfache und stabile Konstruktion für Doppelmesser-Mähwerke zur Verfügung steht.

Der lineare gleichmäßige Antrieb der Mähmesser verringert erheblich den Verschleiß, führt aber andererseits gegebenenfalls zu einem so ruhigen Lauf des Mähwerks, daß das Abschütteln des Mähguts hierdurch erschwert ist. Hier greift die Maßnahme nach Anspruch 7 ein: durch die leicht asymmetrische Anordnung der Lagerstellen der Mähgut-Abweisblende wird ein laufendes Abgleiten des sich anhäufenden Mähguts erreicht, wobei das vordere Ende der Abweisblende, das insbesondere nasenförmig gestaltet ist, nicht ständig gleichphasig mit dem oberen Messer mitläuft, sondern gegenüber diesem eine nennenswerte Relativbewegung in Querrichtung ausführt, so daß die Nase mal an einem Messerzahn und mal an einer Zahnkerbe liegt. Das daraufgefallene Mähgut wird ständig seitwärts verdrängt und verschoben sowie vom Mähwerk heruntergeschoben. Der Abschüttel-Effekt wird noch durch die Lagerung der Abweisblende über elastische Puffer verstärkt, die dazu führt, daß die Abweisblende und die Messer zum Zeitpunkt von Umsteuerungen gewisse Vibrationen ausführen, die das Lösen des Mähguts erleichtern.

Weitere Einzelheiten, Vorteile und Weiterbildungen der Erfindung ergeben sich aus der folgenden Beschreibung bevorzugter Ausführungsbeispiele unter Bezugnahme auf die Zeichnung. Es zeigen:
- Fig. 1: eine schematische perspektivische Darstellung eines Mähfahrzeugs mit Mähwerk;
- Fig. 2: eine seitlich teilweise aufgeschnittene Seitenansicht eines Mähfahrzeugs mit Mähwerksantrieb gemäß einer ersten Ausführungsform;
- Fig. 3: eine vergrößerte Teilansicht aus der Darstellung nach Figur 2, unter genauerer Darstellung des Mähwerksantriebs;
- Fig. 4: aus einer Schnittebene IV - IV heraus eine Vorderansicht von Teilen des Mähwerksantriebs nach Fig. 3;
- Fig. 5: eine Draufsicht auf den Mittelbereich des Mähwerks;
- Fig. 6 und 7: schematische Draufsichten auf das Mittelstück des Mähwerks unter Weglassung der Abweisblende in verschiedenen Bewegungsphasen;
- Fig. 8: eine seitlich teilweise aufgeschnittene Seitenansicht eines Mähfahrzeugs mit Mähwerksantrieb gemäß einer weiteren Ausführungsform mit verändertem Antrieb und Lagerung der Abweisblende.

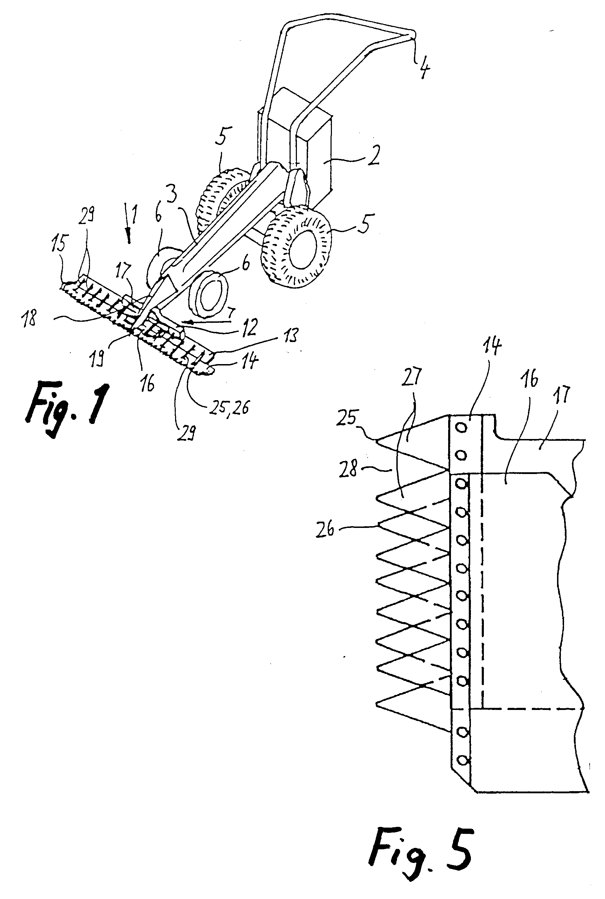

Fig. 1 zeigt als Beispiel eines Fahrzeugs mit Doppelmesser-Mähwerk ein handgeführtes Fahrzeug mit einem Mähwerk 1, einem schematisch als Block dargestellten Antriebsmotor 2, einem Antriebswellengehäuse 3, einem Führungsholm 4, Antriebsrädern 5 und Laufrädern 6. Ein Mähwerksantrieb 7 umfaßt die Antriebsübertragungsteile zwischen dem Motor 2 und dem Mähwerk 1. Der Motor 2 sitzt am dem Mähwerk 1 gegenüberliegenden Ende des Antriebwellengehäuses.

Das Mähwerk 1 und der Mähwerksantrieb 7, zu denen man auch noch das Antriebswellengehäuse 3 mit einer darin befindlichen Antriebswelle 11 rechnen kann, umfassen weiterhin eine balkenartige Führungstraverse 13, ein oberes Messer 14 und ein unteres Messer 15, eine Antriebstraverse 16 für das obere Messer 14 und eine Antriebstraverse 17 für das untere Messer 15, sowie eine Mähgut-Abweisblende 18, die den Mittelbereich des Mähwerks und den Ansatz des Antriebswellengehäuses 3 tunnelartig überdeckt und vorne in einer Nase 19 spitz zuläuft.

Jedes der Messer 14 und 15 weist einen vorderen Schneidenrand 25 bzw. 26 auf, der jeweils aus Schneidzähnen 27 mit zwischenliegenden Zahnzwischenräumen oder Kerben 28 besteht. Die Teilung dieser Verzahnung, und damit die erforderliche Bewegungsweite jedes der Messer in Querrichtung, liegt in der Größenordnung von 60 mm bis 90 mm. Wenn sich die oberen und die unteren Messer stets gegenphasig bewegen, obliegt es der Konstruktion, ob in den beiden Extremstellungen der Messer jeweils nächstbenachbarte Schneidezähne des oberen und des unteren Messers übereinanderliegen oder die Bewegung jeweils bis zu den übernächsten Schneidezähnen geht. Entspricht die Querbewegungsweite genau der Teilung, also dem Abstand zweier benachbarter Zahnspitzen, so wechselt der einzelne Zahn jedes Messers jeweils zwischen zwei übernächsten Zähnen des anderen Messers hin und her. Die Messer sind hierbei durch die Führungstraverse 13 geführt.

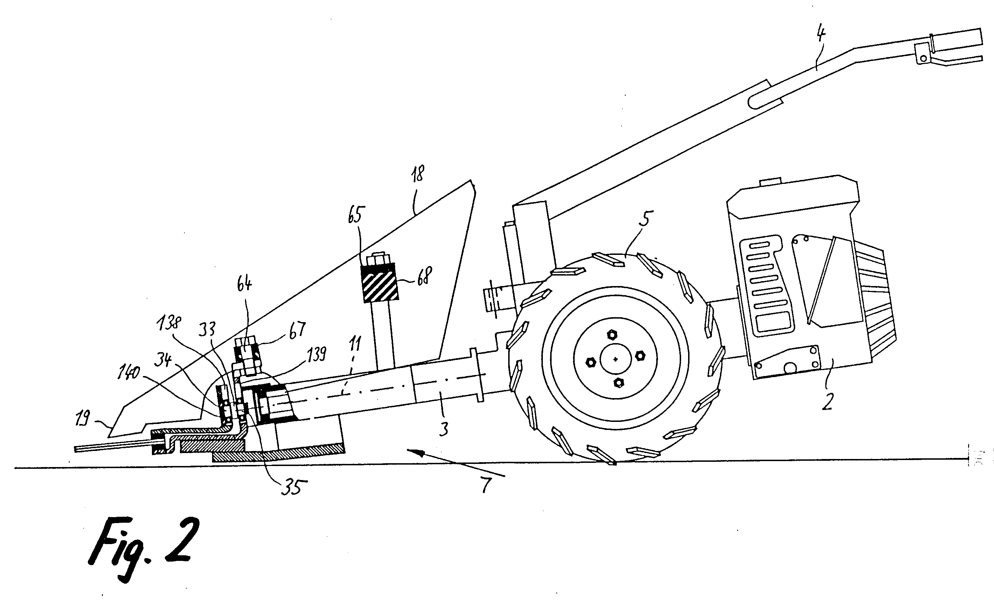

Die dargelegte Prinzipkonstruktion ist in Fig. 2 in in Details abgewandelter Ausführung anhand eines Ausführungsbeispiels in Seitenansicht veranschaulicht. Es handelt sich hier um ein Einachsfahrzeug, bei dem der Motor 2 einen wesentlichen Teil des Gegengewichts zum Mähwerk liefert, so daß dieses bei Bedarf leicht in die Höhe geschwenkt werden kann. Die Antriebswelle 11 im Gehäuse 10 verläuft zwischen dem Motor 2 und dem Mähwerk 1 horizontal bis leicht geneigt.

Die Antriebsenergie wird vom Motor 2 über die Antriebswelle 11 zu den Messern 14 und 15 geleitet. Hierzu ist die Antriebswelle starr mit einer zur Antriebswelle koaxialen Kurbel 33 verbunden, die zwei Kröpfungen mit Kurbelzapfen 34 und 35 aufweist, von denen die Kröpfung mit dem Kurbelzapfen 34 dem oberen Messer 14 und die Kröpfung mit dem Kurbelzapfen 35 dem unteren Messer 15 zugeordnet ist.

Der Kurbelzapfen 14 ist mit einem balligen Kugellager 36 und der Kurbelzapfen 35 mit einem balligen Kugellager 37 versehen, die als reibungsarm gelagerte Rollen der Kurbelzapfen dienen. Der Kurbelzapfen 34 läuft mit seinem Kugellager 36 in einer Kulisse 138 und der Kurbelzapfen 35 läuft mit seinem Kugellager 37 in einer Kulisse 139. Die Kulissen weisen jeweils ein rechteckiges Langloch mit im wesentlichen vertikal verlaufender Längserstreckung auf, dessen parallel zur Bewegungsrichtung der Messer verlaufende Quererstreckung geringfügig größer ist als der Durchmesser der Kugellager 36, 37 und deren vertikale Längserstreckung geringfügig größer ist als der Durchmesser der kreisförmigen Bewegungsbahn der Kurbelzapfen 34 bzw. 35 zuzüglich des Durchmessers des jeweiligen Kugellagers. Die Kulisse 138 ist an der Oberseite ihres Langlochs offen, um an Bauhöhe zu sparen, sie ist jedoch zur Geräte-Vorderseite zu durch eine Deckplatte 140 geschlossen und dadurch weitgehend geschützt.

Die Kulisse 138 ist integral mit der Antriebstraverse 16 und die Kulisse 139 ist integral mit der Antriebstraverse 17 verbunden. Eine Drehung der Antriebswelle 11 führt also zu entgegengesetzten Bewegungen der Messer 14 und 15.

Beim dargestellten Beispiel sind die Kurbel-Kröpfungen in Bezug zur Kurbelachse um 180° gegeneinander versetzt. Diese Ausführung hat den Vorteil, daß die beiden Messer stets in entgegengesetzter Bewegungsrichtung laufen, hat jedoch den Nachteil, daß während eines Teils der Drehbewegung der Kurbel das Bremsmoment sehr viel niedriger ist als im anderen Teil der Drehbewegung, nämlich im Bereich der Umkehrpunkte der Messer. In dieser Bewegungsphase ist sowohl die Bremsung aufgrund der Messer gegeneinander gering, als auch der Schneidwiderstand niedrig. Zur Zeit, zu der die beiden Kröpfungen übereinander liegen, sind hingegen die beiden Komponenten des Bremswiderstands maximal. Sofern sich diese vom Drehwinkel abhängige starke Änderndung des Bremsmoments für den Antriebsmotor als nachteilig auswirkt, kann entweder durch eine Schwungmasse oder durch einen von 180° abweichenden Winkelabstand der Kröpfungen in der Kurbel eine Vergleichmäßigung vorgesehen werden. Beträgt dieser Winkelabstand beispielsweise 170°, so folgen die beiderseitigen bremsmomentfreien Umkehrpunkte ebenso wie die Zeitpunkte der höchsten Geschwindigkeiten kurz hintereinander. Außerdem sind in diesem Fall auch die Reibungskräfte im Umkehrpunkt nicht 0, da das jeweils andere Messer bereits bzw. noch in Bewegung ist. Das durch die Reibung verursachte Bremsmoment ist, bezogen auf die Antriebsleistung der Antriebswelle, am gleichmäßigsten, wenn die Kurbelkröpfungen einen Abstand von 90° bzw. 270° zueinander haben. In diesem Fall ist jedoch der Mäheffekt beeinträchtigt, da während einer längeren Phase des Bewegungsablaufs die Messer mehr oder weniger hintereinander herlaufen. In Abhängigkeit von den Bedingungen des Einzelfalls dürfte also ein Winkelabstand der Kröpfungen zueinander nah bei 180° zu bevorzugen sein.

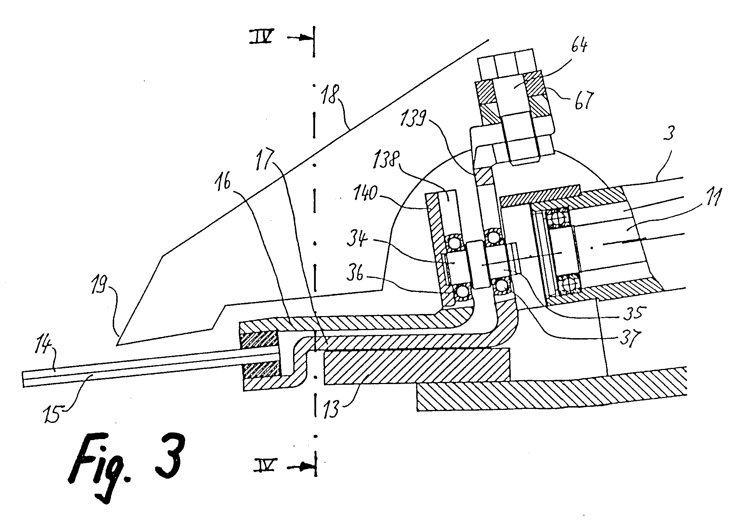

Wie in Fig. 3 ersichtlich ist, weist die Antriebstraverse 17 eine Kröpfung auf, die um eine der Kanten der balkenförmigen, gerätefesten Führungstraverse 13 gekröpft ist. Die Antriebstraverse 17 liegt außerdem gleitend auf der Führungstraverse 13 auf. Zusammen mit den sonstigen Messerführungen ist hierdurch eine Gleitführung geschaffen, die einen ausreichenden Schutz vor Verkantungen, Blockierungen und vor Abrieb ergibt.

Die beschriebene Konstruktion nach den Figuren 2 bis 4 weist eine besonders einfache Bauart auf. Die lineare Führung aufgrund der Teile 13 und 17 vermeidet Verkantungen des unteren Messers 15 und die Führung der oberen Antriebstraverse 16 auf der unteren Antriebstraverse 17 vermeidet Verkantungstendenzen des oberen Messers 14. Durch die besonders kurze Bauart dieses doppelten Kurbelantriebs kann der Messerantrieb ganz nahe an die Messer verlegt werden, was wiederum die Verkantungstendenzen verringert.

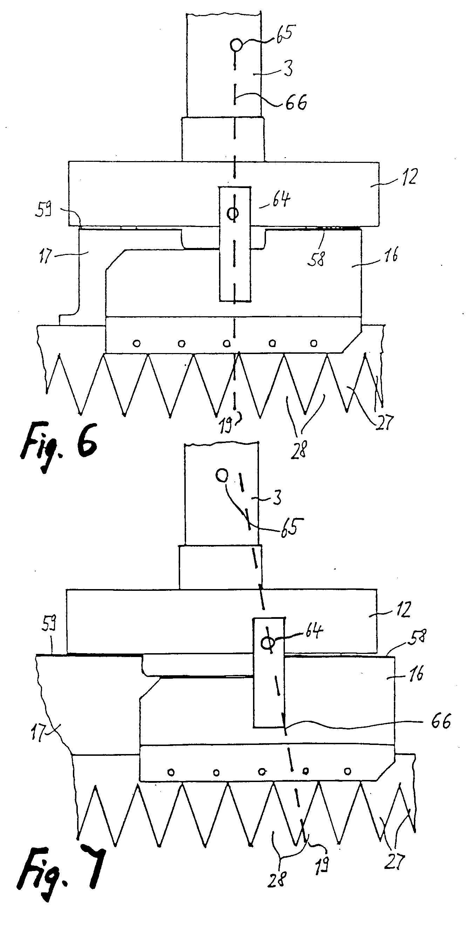

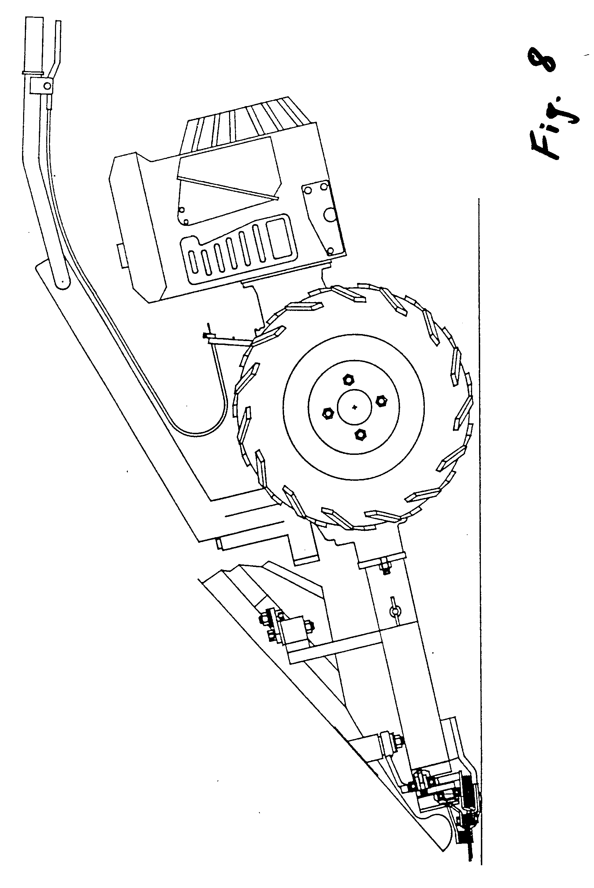

Mit dem oberen Messer 14 wandert auch die Nase 19 der Mähgut-Abweisblende 18 hin und her, und zwar mit einer gegenüber dem Messer abweichenden Amplitude, so daß die Nase 19 mal über einem Schneidezahn 27 und mal über einer Kerbe 28 steht (Fig. 6, 7) und hierdurch das über das obere Messer 14 und die Abweisblende 18 gefallenen Mähgut beiseite schiebt. Für diese hin- und herschwingende Bewegung ist die Abweisblende 18 an zwei Stellen gelagert, nämlich an einem Lager 64, das mit einem der Messer verbunden ist, und einem Lager 65, das mit dem Antriebswellengehäuse 3 verbunden ist. Das Lager 65 ist unbeweglich gerätefest und wirkt somit als Verschwenkungszentrum. In den Fig.n 6 und 7 sind die Kulissen abgedeckt als Rechtecke dargestellt.

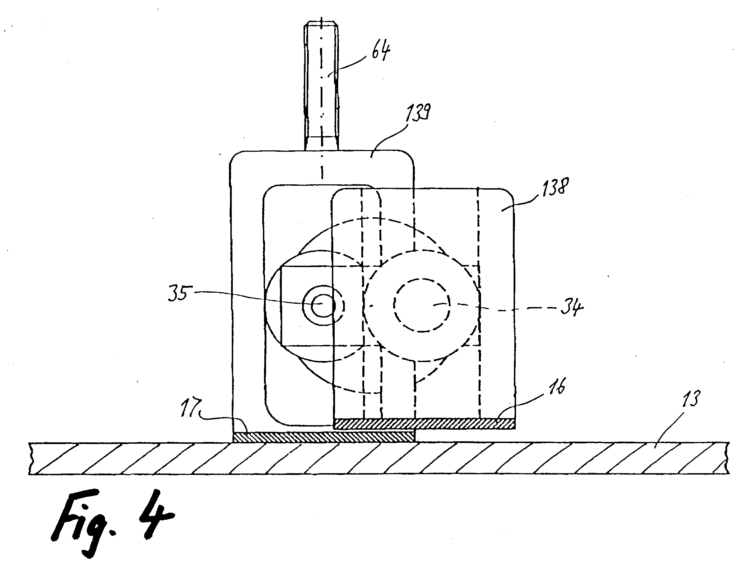

Das Lager 64 sitzt nach Fig. 4 an der Kulisse 139. Der die Verschwenkung antreibende Radius, also der Abstand zwischen den Lagern 65 und 64, ist wesentlich kleiner als der Abstand zwischen dem Lager 65 und den Schneidenrändern 25 und 26 der Messer, woraus die erhöhte Schwingungsamplitude resultiert. Ein zweckmäßiges Abstandsverhältnis, vom Lager 65 aus gemessen, zum Lager 64 in Bezug zum Schneidenrand 25 liegt in der Größenordnung von 60%.

Besonders geeignet ist eine unsymmetrische Anordnung der Abweisblende derart, daß entweder des Lagers 65 in Querrichtung außermittig angeordnet ist, wie in Fig. 6 angedeutet, oder die Bohrung in der Abweisblende 18, an welcher die Verbindung zum Zapfen des Lagers 65 erfolgte, etwas außerhalb der Symmetrieachse angebracht ist, wie in Fig. 7 gedeutet ist. Die Längs-Symmetrieachse der Abweisblende 18 ist mit 66 bezeichnet. Die Bohrung kann sich z. B. ca. 1 cm neben der Symmetrieachse 66 befinden. Damit wird die Abweisblende 18 leicht asymmetrisch montiert, was das Abwerfen des Mähguts deutlich begünstigt.

Die Lager 64 und 65 enthalten je einen elastischen Puffer 67 bzw. 68, jeweils in Form einer Gummischeibe. Auf den Gummischeiben, die um die Zapfen der Lager gelegt sind, stützt sich das Gewicht der Abweisblende 18 ab. Bei allen Ungleichmäßigkeiten des Antriebsmoments oder des Bremsmoments ergibt dieses Moment zusammen mit der Masse der Abweisblende eine Vibration, die dem Abschütteln des Mähguts förderlich ist.

In einer weiteren Ausführungsform gemäß Fig. 8 kann die Abweisblende auch über zusätzliche Elemente an den Lagern 64 und 65 befestigt werden. Durch die Verwendugn unterschiedlich langer Hebel erreicht man eine Veränderung der Amplitude der Bewegung der Abweisblende und damit wiederum einen besseren Abschütteleffekt.

## Patentansprüche

1. Mähwerksantrieb zur Verwendung an einem Nutzfahrzeug, das über eine drehbare Antriebswelle (11) mit dem Mähwerk (1) verbunden ist, mit zwei horizontalen, aufeinanderliegenden, hinsichtlich der Vorwärtsrichtung des Fahrzeugs quer verlaufenden Messern (14, 15), die an ihrer vorderen Schneidenseite (25, 26) gezahnt sind und unter alternierender Überdeckung und Nebeneinanderlage der Zähne (27) der beiden Messer relativ zueinander seitwärts linear hin- und herbewegbar sind, und mit einem Bewegungswandler (12), der die Drehbewegung der Antriebswelle (11) in die Hin- und Herbewegung der Messer (14, 15) umwandelt, dadurch gekennzeichnet, daß der Bewegungswandler ein Geradschubkurbeltrieb (33, 34, 138, 139) ist, dessen Kurbel einen Anschluß an die Antriebswelle (11) und Anschlüsse für den Abtrieb außerphasiger reziprokierender Linearbewegungen aufweist, indem er an einem drehbaren Eingangszapfen wenigstens zwei Kröpfungen mit Kurbelzapfen (34, 35) aufweist, deren Kurbelwinkel gegeneinander 90° bis 270° beträgt und die jeweils an einer Kulisse (138, 139) mit einem Langloch angreifen, die mit einer geführten Antriebstraverse (16, 17) für den Anschluß zum Abtrieb der Linearbewegung und deren Übertragung auf das jeweilige bewegliche Messer (14, 15) verbunden ist, wobei die Kurbelzapfen jeweils in eines der Langlöcher eingreifen und diese ihre Längserstreckung, die wenigstens gleich dem Durchmesser der Kurbelzapfenbahn ist, in einer Richtung quer zur Bewegungsrichtung der Messer hat.

2. Mähwerksantrieb nach Anspruch 1, dadurch gekennzeichnet, daß zu ihrer Führung in der Messer-Bewegungsrichtung die beiden Antriebstraversen (16, 17) jeweils einen ebenen Teil aufweisen, und daß die beiden ebenen Teile aneinander gleitend aufeinanderliegen und sich unten auf einer maschinenfesten Führungstraverse (13), deren Längsrichtung sich in der Messer-Bewegungsrichtung erstreckt, abstützen.

3. Mähwerksantrieb nach Anspruch 2, dadurch gekennzeichnet, daß die Führungstraverse (13) balkenförmig ausgebildet ist und in der Messer-Bewegungsrichtung geradlinige Kanten aufweist und wenigstens eine der Antriebstraversen (16, 17) um eine der geradlinigen Kanten herum gekröpft ist.

4. Mähwerksantrieb nach einem der Ansprüche 1 bis 3, dadurch gekennzeichnet, daß die Kurbelzapfen (34, 35) ebenso wie die Kulissen (138, 139) in der Verlaufsrichtung der Antriebswelle (11) hintereinander angeordnet sind und die in der Vorwärtsrichtung des Fahrzeugs vordere Kulisse (138) an ihrer Vorderseite eine das Langloch überdeckende Abdeckplatte (140) trägt.

5. Mähwerksantrieb nach einem der Ansprüche 1 bis 4, dadurch gekennzeichnet daß der Kurbelwinkel der Kurbelzapfen (34, 35) zueinander im Bereich von 150° bis 210° liegt.

6. Mähwerksantrieb nach Anspruch 5, dadurch gekennzeichnet, daß der Kurbelwinkel der Kurbelzapfen (34, 35) zueinander 180° beträgt.

7. Mähwerksantrieb nach einem der Ansprüche 1 bis 6, dadurch gekennzeichnet, daß eine vor und über dem Bewegungswandler angeordnete Mähgut-Abweisblende (18) in Bezug zur Antriebswelle (11) und zum Mähwerk (1) asymmetrisch angeordnet ist.

8. Mähwerksantrieb nach Anspruch 7, dadurch gekennzeichnet, daß die Abweisblende (18) und ein Gehäuse (3) für die Antriebswelle jeweils eine Längs-Symmetrieachse (für 18: 66) aufweisen, daß die Abweisblende (18) an zwei hintereinanderliegenden Stellen (64, 65) mit angenähert vertikalen Achsen gelagert ist, nämlich einerseits an einem gerätefesten Lager (65) und andererseits an einem mit dem beweglichen bzw. einem der Messer (14) verbundenen Lager (64), und daß die Lagerung am gerätefesten Lager (65) außerhalb der Längs-Symmetrieachse des Gehäuses (3) und/oder der Abweisblende (18) liegt.

9. Mähwerk nach Anspruch 8, dadurch gekennzeichnet, daß der vordere Rand (19) der Abweisblende (18) in kleinem Abstand über dem oberen Messer (14) endet und mit diesem zu einer hin- und hergehenden Bewegung angetrieben ist, und daß das mit dem Messer (14) verbundene Lager (64) sich hinsichtlich der Fahrtrichtung in einem Abstand von der Schneide (25) des Messers (14) befindet.

10. Mähwerksantrieb nach Anspruche 8 oder 9, dadurch gekennzeichnet, daß das mit dem Messer (14) verbundene Lager (64) an einer der Kulissen (138, 139) sitzt.
